# EUROPEAN PATENT APPLICATION

(11) **EP 4 632 535 A1**
(43) Date of publication of application: **15.10.2025**
(21) Application number: 24196592.0
(22) Date of filing: 27.08.2024
(51) Int. Cl.: G06F 3/01, G06F 9/48, G06F 9/50

(54) **TASK HANDOFF METHOD, APPARATUS, ELECTRONIC DEVICE AND STORAGE MEDIUM**

(30) Priority: 11.04.2024 CN 202410437596
(71) Applicant: Beijing Xiaomi Mobile Software Co., Ltd., Beijing 100085 (CN)
(72) Inventor: CHEN, Yang, Beijing, 100085 (CN); SHAN, Zhiliang, Beijing, 100085 (CN)
(74) Representative: Dehns Germany Partnerschaft mbB

(57) **Abstract**

A task handoff method includes: displaying a target task, where the target task is a task that is running in a foreground and can be handed off on a first device; and in response to detection that a device at which a target user is gazing is switched from the first device to a second device, handing off the target task from the first device to the second device, so as to display the target task on the second device; where the first device is associated with at least one third device, and the second device is any one of the at least one third device.

## Description

### TECHNICAL FIELD

The present disclosure relates to the technical field of computer, and in particular, to a task handoff method, apparatus, electronic device and storage medium.

### BACKGROUND

With the increasing prevalence of multi-device use, in order to improve user productivity, the use of cross-device task handoff technology is also increasing. The cross-device task handoff technology refers to a technology that allows users to seamlessly migrate and continue to perform tasks between different devices. For example, the cross-device task handoff technology can be applied to cloud synchronization services, cross-device applications, operating system integration, multi-device collaboration tools and other scenarios.

### SUMMARY

The present disclosure provides a task handoff method, apparatus, electronic device and storage medium.

According to the first aspect of the present disclosure, a task handoff method is provided, the method including: displaying a target task, where the target task is a task that is running in a foreground and can be handed off on a first device; and in response to detection that a device at which a target user is gazing is switched from the first device to a second device, handing off the target task from the first device to the second device, so as to display the target task on the second device; where the first device is associated with at least one third device, and the second device is any one of the at least one third device.

According to the second aspect of the present disclosure, a task handoff apparatus is provided, the apparatus including: a display module, configured to display a target task, where the target task is a task that is running in a foreground and can be handed off on a first device; and a task handoff module, configured to hand off the target task from the first device to a second device in response to detection that a device at which the target user is gazing is switched from the first device to the second device, so as to display the target task on the second device; where the first device is associated with at least one third device, and the second device is any one of the at least one third device.

According to the third aspect of the present disclosure, an electronic device is provided, including: a processor; and a memory for storing instructions executable by the processor; where the processor is configured to perform the method according to the first aspect.

According to the fourth aspect of the present disclosure, a non-transitory computer-readable storage medium is provided, and when instructions in the storage medium are executed by a processor of an electronic device, the electronic device is caused to perform the method according to the first aspect.

It should be understood that the above general description and the detailed description below are only exemplary and explanatory, and do not limit the present disclosure.

### BRIEF DESCRIPTION OF THE DRAWINGS

The accompanying drawings, which are incorporated in and constitute a part of this specification, illustrate embodiments consistent with the present disclosure and, together with the specification, serve to explain the principles of the present disclosure.
FIG. 1 is a schematic diagram of an application scenario according to an exemplary embodiment;
FIG. 2 is a flowchart of a task handoff method according to an exemplary embodiment;
FIG. 3 is a flowchart of a task handoff method according to an exemplary embodiment;
FIG. 4 is a flowchart of a task handoff method according to an exemplary embodiment;
FIG. 5 is a flowchart of a task handoff method according to an exemplary embodiment;
FIG. 6 is a flowchart of a task handoff method according to an exemplary embodiment;
FIG. 7 is a block diagram of a task handoff apparatus according to an exemplary embodiment;
FIG. 8 is a block diagram of an electronic device according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

The task handoff methods provided in the embodiments of the present disclosure are based on gaze perception technology and cross-device task handoff technology. Before introducing the task handoff method provided by the present disclosure, the gaze perception technology and cross-device task handoff technology are first described.

### Cross-device task handoff technology:

Cross-device task handoff technology refers to technology that allows users to seamlessly migrate and continue to perform tasks between different devices. The development of this technology is mainly to improve productivity of the user, especially nowadays when multi-device use is becoming increasingly common. The following are some applications of cross-device task handoff technology:
1. Cloud synchronization service: Cloud services allow users to synchronize files and data between different devices. In this way, users can work on one device and continue to work seamlessly on another device.
2. Cross-device applications: Some applications can run on a plurality of devices and synchronize user status and data through cloud services. For example, a reading application can synchronize bookmarks where the user stopped reading so that the user can continue reading on another device.
3. Operating system integration: Some operating systems allow users to seamlessly switch and continue tasks among mobile phones, tablets, laptops, and wearable devices.
4. Browser synchronization: Browsers allow users to synchronize bookmarks, history, passwords, and opened tabs, allowing users to seamlessly switch between browsers on different devices.
5. Remote desktop and application handoff: Remote desktop protocols, virtual network computing, etc. allow users to remotely access and control another device to achieve cross-device work.
6. Internet of Things (IoT) and smart home integration: With the popularity of IoT devices, users can control smart devices in their homes through smartphones, tablets, or smart watches, etc., to achieve cross-device interaction and task handoff.
7. Multi-device collaboration tools: Some multi-device collaboration tools support multi-device login and provide real-time communication and collaboration functions, allowing different users to work together on different devices.
8. Advanced user authentication: Using biometrics (such as fingerprint recognition, facial recognition) and multi-factor authentication, user identities can be switched between devices more securely and conveniently, thereby supporting cross-device task handoff.

As technology continues to advance, cross-device task handoff can be more intelligent and seamless, such as predicting users' task migration needs through artificial intelligence, or creating a more immersive multi-device working environment through augmented reality and virtual reality technology.

### Gaze perception technology:

The gaze perception function can also be called "attention detection" or "smart standby". The gaze perception function is implemented based on the front camera and/or a dedicated infrared sensor. These sensors can detect whether the user is gazing at the screen and perform different operations accordingly, such as keeping the screen on or pausing video playback.

In some devices, the gaze perception function can be implemented through an advanced sensor array, which includes an infrared camera, a dot projector, an illumination sensor, and a front camera. The advanced sensor array can create an accurate 3D map for facial recognition (Face ID) and can also detect whether the user is gazing at the screen. On other devices, a standard front camera combined with a facial recognition algorithm can be used to detect the user's gaze. This method is not as accurate as the advanced sensor array, but it can also provide the basic gaze perception function.

The task handoff method provided in the embodiments of the present disclosure is applied to a plurality of devices, and the plurality of devices are related to each other. The plurality of devices can be devices with gaze perception functions, such as mobile phones, tablets, laptops, televisions, wearable devices, and vehicle-mounted terminals.

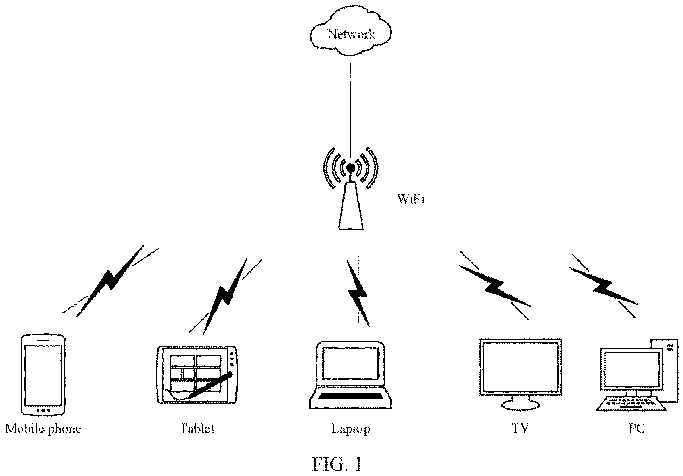

In some embodiments, the plurality of devices are logged in by the same account and are in the same local area network, where the account can be an account registered by the user through any device, and the account supports simultaneous login on different devices. In an example, referring to the schematic diagram of the application scenario shown in FIG. 1, the plurality of devices can be mobile phones, tablets, laptops, televisions, and Personal Computers (PCs), and the plurality of devices are connected to the same Wireless Fidelity (WiFi). When the plurality of devices use the task handoff method provided in the embodiments of the present disclosure, the user can hand off tasks among the plurality of devices, that is, migrate tasks from one device to another device, and continue to execute tasks on another device.

The embodiments of the present disclosure take the plurality of devices including a first device and at least one third device as an example, the first device is a local device, that is, the first device is the device that starts and runs the task at the beginning, and the at least one third device is a remote device used for handoff, and the task running in the first device can be handed off to any third device.

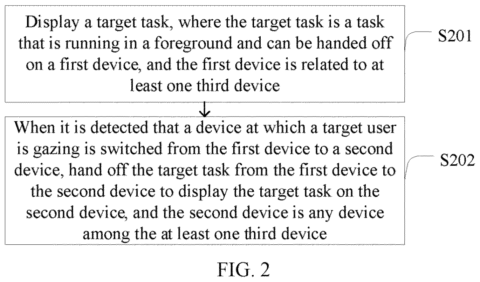

FIG. 2 is a flowchart of a task handoff method according to an exemplary embodiment, which is executed by a first device. Referring to FIG. 2, the method includes the following steps.

In step S201, a target task is displayed, where the target task is a task that is running in a foreground and can be handed off on the first device, and the first device is related to at least one third device.

The target task is a task that is running in the foreground in the first device, and the target task can be an application running in the foreground, or the target task can also be a component running in the foreground, etc. Moreover, in order to realize the subsequent handoff of the target task among the plurality of devices, the target task needs to be a task that can be handed off.

When the device turns on the gaze perception function, the device can detect whether the user is gazing at the device. When the device does not turn on the gaze perception function, the device cannot detect whether the user is gazing at the device. The method provided by the embodiments of the present disclosure realizes task handoff based on the gaze perception technology. Therefore, the first device and the at least one third device need to turn on the gaze perception function. Detecting whether the user is gazing at the device means detecting whether the user is gazing at the screen of the device, that is, when it is detected that the user is gazing at the screen of the device, it is determined that the user is gazing at the device; when it is not detected that the user is gazing at the screen of the device, it is determined that the user is not gazing at the device.

In step S202, when it is detected that the device at which the target user is gazing is switched from the first device to a second device, the target task is handed off from the first device to the second device to display the target task on the second device, and the second device is any device among the at least one third device.

In the embodiments of the present disclosure, the target user can start gazing at the first device before the first device displays the target task, or can start gazing at the first device after the first device starts to display the target task. When the target user no longer gazes at the first device but starts gazing at the second device, it means that the focus of the target user has been handed off from the first device to the second device. In order to enable the target user to continue to perform the target task on the first device, the first device hands off the target task from the first device to the second device, thereby displaying the target task on the second device. The target task will continue to be displayed on the first device. The second device is any device among at least one third device.

Handing off the target task from the first device to the second device means: sending information related to the target task to the second device, so that the second device can display the target task according to the information related to the target task.

In the method provided by the embodiments of the present disclosure, the first device displays the target task, and when the target user switches from gazing at the first device to gazing at the second device, the first device directly hands off the target task from the first device to the second device to display the target task on the second device. During the task handoff process, the target user only needs to switch from gazing at the first device to gazing at the second device without performing other operations. The operation is more concise and efficient, and the user experience is improved.

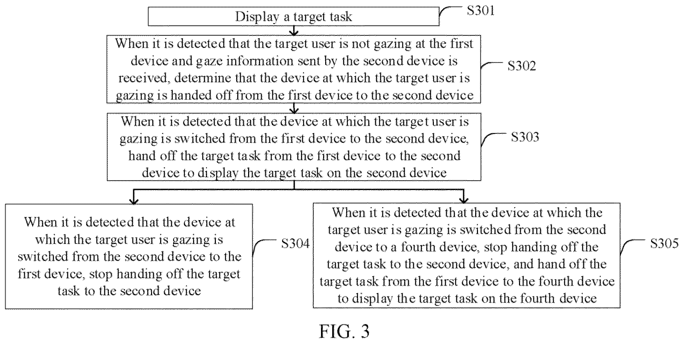

FIG. 3 is a flowchart of a task handoff method according to an exemplary embodiment, which is executed by the first device. Referring to FIG. 3, the method includes the following steps.

In step S301, a target task is displayed.

The target task is a task that is running in a foreground and can be handed off on the first device. In an example, the target task can be tasks such as loading a game, waiting for resurrection in a game, and playing a video. The embodiments of the present disclosure do not limit the specific content of the target task.

In some embodiments, the first device can display the target task at any time, and the target task can be a task triggered by any user.

In step S302, when it is detected that the target user is not gazing at the first device and gaze information sent by the second device is received, it is determined that the device at which the target user is gazing is handed off from the first device to the second device.

In the embodiments of the present disclosure, for a device, the device can detect a user who is gazing at the device. When a plurality of users are gazing at the device, the device can detect that a plurality of users are gazing at the device. However, in the process of task handoff, one user needs to be taken as a basis. Therefore, when the first device detects a plurality of users, it is necessary to determine the target user from the plurality of users. Subsequently, the gaze of the target user is taken as the basis, and the gaze of other users will not affect the task handoff.

In some embodiments, when the first device detects a plurality of users, and the plurality of users include a reference user, the reference user is determined as the target user; or, when the first device detects a plurality of users, and the plurality of users do not include the reference user, any user among the plurality of users is determined as the target user; where the reference user is a user to which an account logged in the first device belongs. That is, when the first device and at least one third device are logged in by the same account, it means that the user using the first device and at least one third device is most likely the user to which the account belongs, and therefore, the user to which the account belongs is given priority.

In some embodiments, since the target task needs to be handed off between the first device and other devices based on the gaze of the same user, it is necessary to ensure that the first device and other devices are based on the same user. Therefore, after the first device determines the target user, user information is sent to each third device respectively, and the user information is used to indicate the target user.

During the process of displaying the target task, the first device can continuously or periodically detect whether the target user is gazing at the first device. When it is detected that the target user is still gazing at the first device, it means that the target user's focus is on the first device, and the first device will not hand off the target task at this time. When it is detected that the target user is not gazing at the first device, it means that the target user's focus has been transferred, which may be transferred to other devices or to other places other than the device. At this time, if it is detected that the target user is gazing at other device, it means that the target user's focus has been transferred to other device. If the other device is any device of at least one third device, the first device will hand off the target task from the first device to the other device. If the other device is not a device associated with the first device, the first device will not hand off the target task. In the embodiments of the present disclosure, taking the second device as an example, when the second device detects that the target user is gazing at the second device, the second device sends gazing information to the first device, where the gazing information is used to indicate that the target user is gazing at the second device.

In some embodiments, for each third device, the third device can continuously or periodically detect whether the target user is gazing at the third device. When the target user is detected to be gazing at the third device, the third device sends the gaze information to the first device. After the first device receives the gaze information sent by the third device, the third device is used as the second device, and it is determined that the device that the target user is gazing at is switched from the first device to the second device.

In some embodiments, since the third device continuously or periodically detects whether the target user is gazing at the third device, it needs to consume a large amount of power of the third device. Therefore, in order to reduce the power consumption of the third device, when it is detected that the target user is not gazing at the first device, the first device sends detection information to each third device respectively, and the detection information is used to indicate to detect the target user's gaze; for each third device, after receiving the detection information, the third device starts to detect whether the target user is gazing at the third device. When the target user is detected to be gazing at the third device, the gaze information is sent to the first device; when the first device receives the gaze information returned by the third device, the third device that returns the gaze information is used as the second device, and it is determined that the device that the target user is gazing at is switched from the first device to the second device.

In step S303, when it is detected that the device at which the target user is gazing is switched from the first device to the second device, the target task is handed off from the first device to the second device to display the target task on the second device.

When the target user no longer gazes at the first device but starts to gaze at the second device, it means that the focus of the target user has shifted from the first device to the second device. Therefore, the first device hands off the target task from the first device to the second device, thereby displaying the target task on the second device. The target task will continue to be displayed on the first device.

In step S304, when it is detected that the device at which the target user is gazing is switched from the second device to the first device, the target task is stopped from being handed off to the second device.

In step S305, when it is detected that the device at which the target user is gazing is switched from the second device to a fourth device, the target task is stopped from being handed off to the second device, and the target task is handed off from the first device to the fourth device to display the target task on the fourth device.

In the embodiments of the present disclosure, after the target task is handed off from the first device to the second device, the second device also needs to continuously or periodically detect whether the target user is gazing at the second device. When it is detected that the target user is still gazing at the second device, it means that the target user's focus is on the second device. At this time, the first device will continue to hand off the target task from the first device to the second device.

When it is detected that the target user is no longer gazing at the second device, it means that the target user's focus has shifted, which may be to other devices or to other places other than the device. At this time, if it is detected that the target user is gazing at other device, it means that the target user's focus has shifted to the other device. If the other device is the first device, it means that the target user's focus has shifted back to the first device, and the first device directly stops handing off the target task to the second device; if the other device is any other third device other than the second device, the first device stops handing off the target task to the second device and hands off the target task from the first device to the above-mentioned any device. In the embodiments of the present disclosure, taking the fourth device as an example, when it is detected that the device at which the target user is gazing is switched from the second device to the fourth device, the target task is stopped from being handed off to the second device, and the target task is handed off from the first device to the fourth device, so as to display the target task on the fourth device.

In some embodiments, similar to the implementation in the above step S302, the first device and other third devices other than the second device can also detect the gaze of the target user. When the device at which the target user is gazing is switched from the first device to the first device again, the first device directly stops handing off the target task to the second device. When the device at which the target user is gazing is switched from the first device to other third device other than the second device, the third device sends gaze information to the first device. After receiving the gaze information sent by the third device, the first device uses the third device as the fourth device, stops handing off the target task to the second device, and hands off the target task from the first device to the fourth device, so as to display the target task on the fourth device.

It should be noted that after step S304 or step S305, the target task can continue to be handed off among a plurality of devices until the plurality of devices are no longer logged in by the same account, or the plurality of devices are no longer in the same local area network, or the gaze perception function of the plurality of devices is turned off.

In some embodiments, each device is provided with a task handoff function switch. When the task handoff function switch is turned on, the task handoff process in the above implementation can be executed. When the task handoff function switch is turned off, even if the plurality of devices meet the conditions of being logged in by the same account, being in the same local area network, and having the gaze perception function turned on, the above task handoff process will not be executed.

In the method provided in the embodiments of the present disclosure, the first device displays the target task. When the target user switches from gazing at the first device to gazing at the second device, the first device directly hands off the target task from the first device to the second device to display the target task on the second device. During the task handoff process, the target user only needs to switch from gazing at the first device to gazing at the second device without performing other operations. The operation is more concise and efficient, and the user experience is improved.

Moreover, compared with the task handoff method in the related art, in the embodiments of the present disclosure, when the user wants to hand off the task from one device to another, the user only needs to shift his/her sight without manual operation (for example, manually dragging the task card), so that the user can also realize the task handoff in the scenario where it is inconvenient to operate manually (for example, the user's hands are dirty, the user holds other objects in his/her hands, etc.), further improving the user experience.

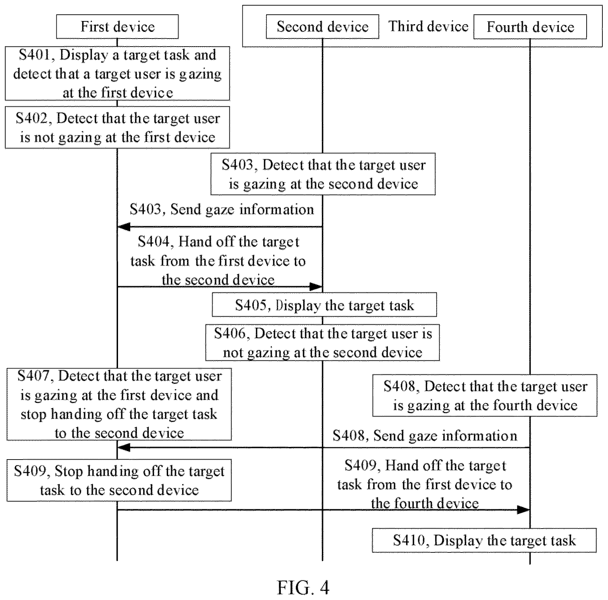

FIG. 4 is a flowchart of a task handoff method according to an exemplary embodiment, which is interactively executed by a plurality of devices. Referring to FIG. 4, the method includes the following steps.

In step S401, the first device displays a target task and detects that a target user is gazing at the first device.

In step S402, the first device detects that the target user is not gazing at the first device.

In step S403, the second device detects that the target user is gazing at the second device and sends gaze information to the first device.

In step S404, the first device hands off the target task from the first device to the second device.

In step S405, the second device displays the target task.

In step S406, the second device detects that the target user is not gazing at the second device.

In step S407, the first device detects that the target user is gazing at the first device and stops handing off the target task to the second device.

In step S408, the fourth device detects that the target user is gazing at the fourth device and sends gaze information to the first device.

In step S409, the first device stops handing off the target task to the second device and hands off the target task to the fourth device.

In step S410, the fourth device displays the target task.

Among them, step S407 and steps S408-S410 are parallel schemes.

The implementation of steps S401-S410 is the same as the implementation shown in FIG. 3, and will not be repeated here.

In some embodiments, in order to better cooperate among a plurality of devices in certain scenarios, a handoff confirmation switch is set. In the case that the handoff confirmation switch is turned off, when it is detected that the device that the target user is gazing at is switched from one device to another device, the task handoff is directly performed; in the case that the handoff confirmation switch is turned on, when it is detected that the device that the target user is gazing at is switched from one device to another device, and the another device detects the handoff confirmation operation, the task handoff is performed, and when it is detected that the device that the target user is gazing at is switched from one device to another device, and the another device does not detect the handoff confirmation operation, the task handoff is not performed. Among them, the handoff confirmation operation can be operations such as blinking twice in a row, waving, OK gesture, etc.

For the first device and the second device, in the case that the handoff confirmation switch of the second device is turned off, when it is detected that the device the target user is gazing at is switched from the first device to the second device, the first device hands off the target task from the first device to the second device. In the case that the handoff confirmation switch of the second device is turned on, when it is detected that the device the target user is gazing at is switched from the first device to the second device, and the second device detects the handoff confirmation operation, the first device hands off the target task from the first device to the second device. Similarly, the task handoff between the first device and the fourth device in the above embodiment is similar.

In an example, the user plays a game on the mobile phone, and in the free time of loading the game, the user wants to watch the news broadcast on TV; or when watching the game replay or watching the game, the user wants to watch it on TV because the TV screen is large and the viewing experience is better. In the first scenario, the user does not want the task on the mobile phone to be handed off to the TV, and in the second scenario, the user wants the task on the mobile phone to be handed off to the TV If there is no handoff confirmation switch, every time the user gazes at the TV, the game on the mobile phone will be handed off to the TV, and the news broadcast on the TV will not be watched. If the handoff confirmation switch is set and turned on, because a handoff confirmation operation is required to trigger the task handoff, when the user wants to watch the news on TV, he/she can directly gaze at the TV without performing the handoff confirmation operation. At this time, the game on the mobile phone will not be handed off to the TV When the user finishes the game and wants to hand off the game to the TV to watch the game replay or watch the game, then the user only needs to gaze at the TV and perform the handoff confirmation operation to hand off the game to the TV

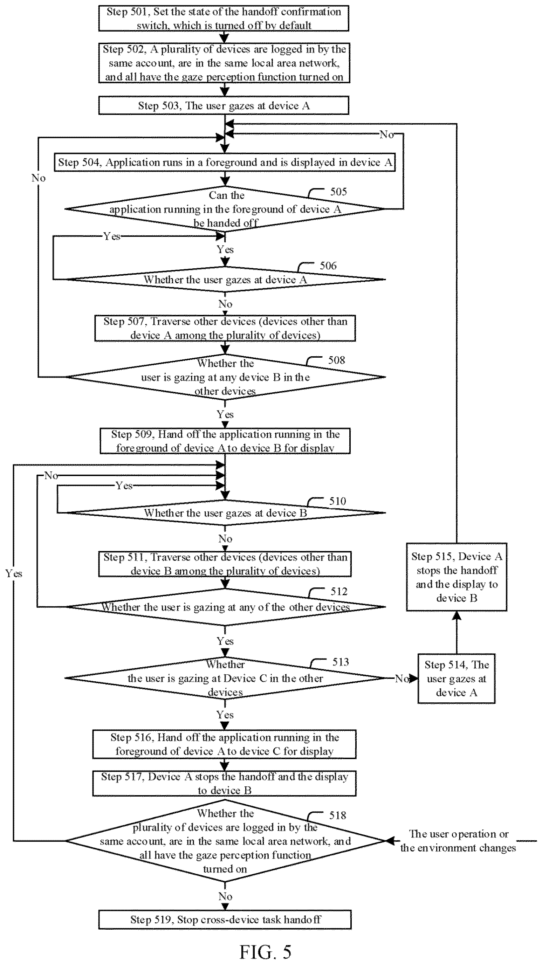

In an example, in the case that the handoff confirmation switch of each device among the plurality of devices is turned off by default, the process of the task handoff method is shown in FIG. 5. Referring to FIG. 5, the method includes the following steps.

In step S501, the state of the handoff confirmation switch is set, which is turned off by default.

In step S502, a plurality of devices are logged in by the same account, are in the same local area network, and all have the gaze perception function turned on.

In step S503, the user gazes at device A.

In step S504, device A runs and displays an application in the foreground.

In step S505, it is determined whether the application running in the foreground of device A can be handed off. If the application can be handed off, step S506 is executed. If the application cannot be handed off, step S504 is executed.

In step S506, it is detected whether the user is gazing at device A. If the user is gazing at device A, step S506 is continued to be executed. If the user is not gazing at device A, step S507 is executed.

In step S507, other devices (devices other than device A among the plurality of devices) are traversed.

In step S508, it is detected whether the user is gazing at any device B among other devices. If the user is gazing at device B, step S509 is executed. If the user is not gazing at device B, step S504 is executed.

In step S509, the application running in the foreground of device A is handed off to device B for display.

In step S510, it is detected whether the user is gazing at device B. If the user is gazing at device B, step S510 is continued to be executed. If the user is not gazing at device B, step S511 is executed.

In step S511, other devices (devices other than device B among the plurality of devices) are traversed.

In step S512, it is detected whether the user is gazing at any of the other devices. If the user is gazing at any of the other devices, step S513 is executed. If the user is not gazing at any of the other devices, step S510 is executed.

In step S513, it is determined whether the user is gazing at device C among other devices. If the user is not gazing at device C, step S514 is executed. If the user is gazing at device C, step S516 is executed.

In step S514, it is determined that the user is gazing at device A.

In step S515, device A stops the handoff and the display to device B.

In step S516, the application running in the foreground of device A is handed off to device C for display.

In step S517, device A stops the handoff and the display to device B.

In step S518, when the user operation or the environment changes, it is determined whether the plurality of devices are logged in by the same account, are in the same local area network, and all have the gaze perception function turned on. If yes, step S510 is executed; and if no, step S519 is executed.

In step S519, cross-device task handoff is stopped.

It should be noted that in step S518, the user operation or environmental change can occur at any time during the task handoff process. In the above example, the user operation or environmental change is detected after the application running in the foreground of device A is handed off to device B for display. Among them, the user operation or environmental change can refer to the user turning off the gaze perception function of the device, the user turning on other application in device A, the user turning off the WiFi function, the user leaving the coverage of the local area network, the user exiting the account login of the device, etc.

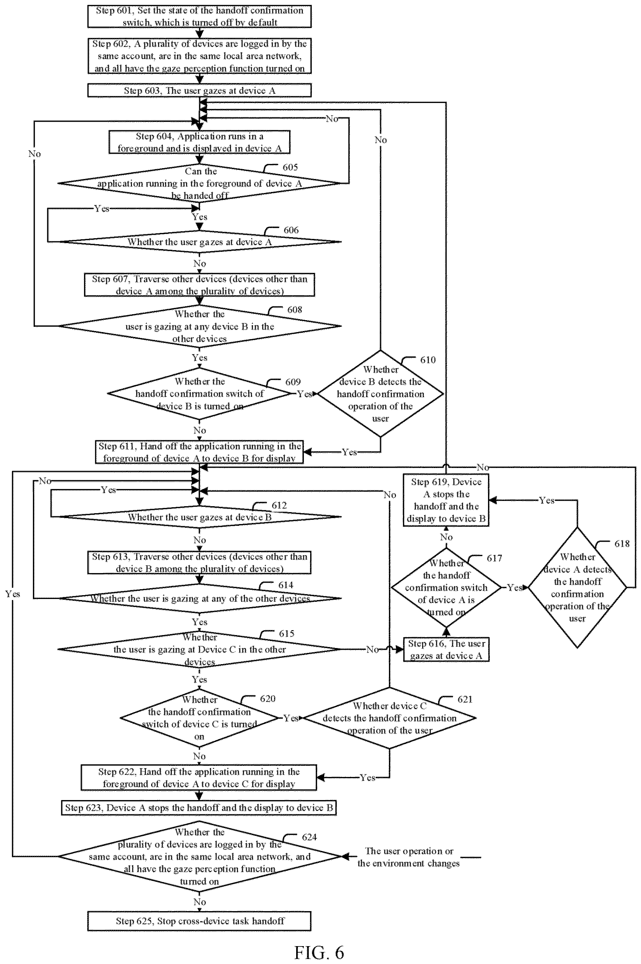

In an example, when the handoff confirmation switch of each device in the plurality of devices may be turned on or off, the process of the task handoff method is shown in FIG. 6. Referring to FIG. 6, the method includes the following steps.

In step S601, the state of the handoff confirmation switch is set, which is turned off by default.

In step S602, a plurality of devices are logged in by the same account, are in the same local area network, and all have the gaze perception function turned on.

In step S603, the user gazes at device A.

In step S604, device A runs and displays an application in the foreground.

In step S605, it is determined whether the application running in the foreground of device A can be handed off. If the application can be handed off, step S606 is executed. If the application cannot be handed off, step S604 is executed.

In step S606, it is detected whether the user is gazing at device A. If the user is gazing at device A, step S606 is continued to be executed. If the user is not gazing at device A, step S607 is executed.

In step S607, other devices (devices other than device A among the plurality of devices) are traversed.

In step S608, it is detected whether the user is gazing at any device B among other devices. If the user is gazing at device B, step S609 is executed. If the user is not gazing at device B, step S604 is executed.

In step S609, it is determined whether the handoff confirmation switch of device B is turned on. If the handoff confirmation switch of device B is turned on, step S610 is executed. If the handoff confirmation switch of device B is turned off, step S611 is executed.

In step S610, it is determined whether device B detects the handoff confirmation operation of the user. If device B detects the handoff confirmation operation of the user, step S611 is executed. If device B does not detect the handoff confirmation operation of the user, step S604 is executed.

In step S611, the application running in the foreground of device A is handed off to device B for display.

In step S612, it is detected whether the user is gazing at device B. If the user is gazing at device B, step S612 is continued to be executed. If the user is not gazing at device B, then step S613 is executed.

In step S613, other devices (devices other than device B among the plurality of devices) are traversed.

In step S614, it is detected whether the user is gazing at any device in other devices. If the user is gazing at any device in other devices, step S615 is executed. If the user is not gazing at any device in other devices, step S612 is executed.

In step S615, it is determined whether the user is gazing at device C in other devices. If the user is not gazing at device C, step S616 is executed. If the user is gazing at device C, step S620 is executed.

In step S616, it is determined that the user is gazing at device A.

In step S617, it is determined whether the handoff confirmation switch of device A is turned on. If the handoff confirmation switch of device A is turned on, step S618 is executed. If the handoff confirmation switch of device A is turned off, step S619 is executed.

In step S618, it is determined whether device A detect the handoff confirmation operation of the user. If device A detects the handoff confirmation operation of the user, step S619 is executed. If device A does not detect the handoff confirmation operation of the user, step S612 is executed.

In step S619, device A stops the handoff and the display to device B.

In step S620, it is determined whether the handoff confirmation switch of device C is turned on. If the handoff confirmation switch of device C is turned on, step S621 is executed. If the handoff confirmation switch of device C is turned off, step S622 is executed.

In step S621, it is determined whether device C detects the handoff confirmation operation of the user. If device C detects the handoff confirmation operation of the user, step S622 is executed. If device C does not detect the handoff confirmation operation of the user, step S612 is executed.

In step S622, the application running in the foreground of device A is handed off to device C for display.

In step S623, device A stops the handoff and the display to device B.

In step S624, when the user operation or the environment changes, it is determined whether the plurality of devices are logged in by the same account, are in the same local area network, and have the gaze perception function turned on. If yes, step S612 is executed; if not, step S625 is executed.

In step S625, cross-device task handoff is stopped.

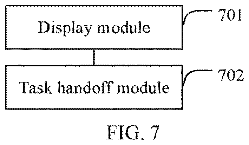

FIG. 7 is a block diagram of a task handoff apparatus according to an exemplary embodiment, which is configured in a first device. Referring to FIG. 7, the apparatus includes:
a display module 701, configured to display a target task, which is a task that is running in a foreground and can be handed off on the first device;
a task handoff module 702, configured to hand off the target task from the first device to a second device when it is detected that a device gazed by the target user is switched from the first device to the second device, so as to display the target task on the second device;
where the first device is associated with at least one third device, and the second device is any one of the at least one third device.

In some embodiments, the task handoff module 702 is configured to:
in a case that a handoff confirmation switch of the second device is turned off, when it is detected that the device gazed by the target user is switched from the first device to the second device, hand off the target task from the first device to the second device.

In some embodiments, the task handoff module 702 is configured to:
in a case that the handoff confirmation switch of the second device is turned on, when it is detected that the device gazed by the target user is switched from the first device to the second device, and the second device detects a handoff confirmation operation, hand off the target task from the first device to the second device.

In some embodiments, the apparatus further includes:
a device determination module, configured to, when it is detected that the target user is not gazing at the first device and gaze information sent by a third device is received, take the third device that returns the gaze information as the second device, and determine that the device at which the target user is gazing is switched from the first device to the second device, where the gaze information is used to indicate that the target user is gazing at the third device.

In some embodiments, the apparatus further includes:
a stop handoff module, configured to stop handing off the target task to the second device when it is detected that the device at which the target user is gazing is switched from the second device to the first device.

In some embodiments, the apparatus further includes:
a stop handoff module, configured to stop handing off the target task to the second device when it is detected that the device at which the target user is gazing is switched from the second device to a fourth device;
the task handoff module 702 is further configured to hand off the target task from the first device to the fourth device to display the target task on the fourth device.

In some embodiments, the apparatus further includes:
a user determination module, configured to, when the first device detects a plurality of users and the plurality of users include a reference user, determine the reference user as the target user; or,
a user determination module, configured to, when the first device detects a plurality of users and the plurality of users do not include the reference user, determine any one of the plurality of users as the target user;
where the reference user is a user to which an account logged in the first device belongs.

In some embodiments, the apparatus further includes:
a user information sending module, configured to send user information to each third device respectively, where the user information is used to indicate the target user.

In some embodiments, the first device and at least one third device are logged in by the same account and are in the same local area network.

Regarding the apparatuses in the above embodiments, the specific manner in which each module performs the operation has been described in detail in the embodiments of the method, and will not be described in detail here.

The embodiments of the present disclosure also provide an electronic device, including: a processor; a memory for storing instructions executable by the processor; where the processor is configured to execute the task handoff method in the above embodiments.

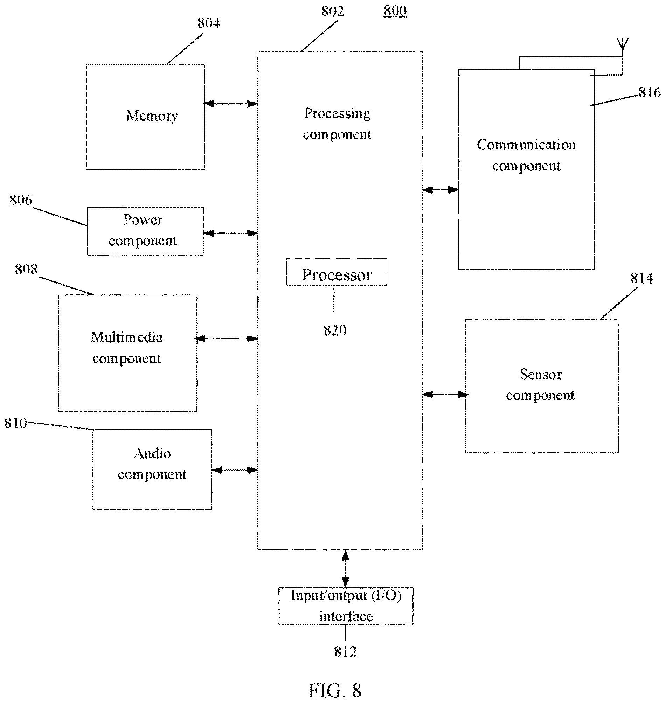

FIG. 8 is a block diagram of an electronic device 800 shown according to an exemplary embodiment.

Referring to FIG. 8, the electronic device 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the electronic device 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the electronic device 800. Examples of such data include instructions for any applications or methods operated on the electronic device 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the electronic device 800. The power component 806 may include a power management system, one or more power sources, and any other components associated with the generation, management, and distribution of power in the electronic device 800.

The multimedia component 808 includes a screen providing an output interface between the electronic device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the electronic device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the electronic device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the electronic device 800. For instance, the sensor component 814 may detect an open/closed status of the electronic device 800, relative positioning of components, e.g., the display and the keypad, of the electronic device 800, a change in position of the electronic device 800 or a component of the electronic device 800, a presence or absence of user contact with the electronic device 800, an orientation or an acceleration/deceleration of the electronic device 800, and a change in temperature of the electronic device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the electronic device 800 and other devices. The device 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the electronic device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 804, executable by the processor 820 in the electronic device 800, for performing the above-described methods. For example, the non-transitory computer-readable storage medium may be a ROM, a RAM, a CD-ROM, a magnetic tape, a floppy disc, an optical data storage device, and the like.

The embodiments of the present disclosure also provide a non-transitory computer-readable storage medium storing instructions, when instructions in the storage medium is executed by the processor of the electronic device, the electronic device is enabled to perform the task handoff method provided by the above-mentioned embodiments.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A task handoff method, comprising:
displaying a target task, wherein the target task is a task that is running in a foreground and can be handed off on a first device;
in response to detection that a device at which a target user is gazing is switched from the first device to a second device, handing off the target task from the first device to the second device, so as to display the target task on the second device;
wherein the first device is associated with at least one third device, and the second device is any one of the at least one third device.

2. The method according to claim 1, wherein in response to detection that the device at which the target user is gazing is switched from the first device to the second device, handing off the target task from the first device to the second device, comprises:
in a case that a handoff confirmation switch of the second device is turned off, in response to detection that the device at which the target user is gazing is switched from the first device to the second device, handing off the target task from the first device to the second device.

3. The method according to claim 1 or 2, wherein in response to detection that the device at which the target user is gazing is switched from the first device to the second device, handing off the target task from the first device to the second device, comprises:
in a case that the handoff confirmation switch of the second device is turned on, in response to detection that the device at which the target user is gazing is switched from the first device to the second device, and a handoff confirmation operation is detected by the second device, handing off the target task from the first device to the second device.

4. The method according to any one of the preceding claims , wherein after displaying the target task, the method further comprises:
in response to detection that the target user is not gazing at the first device and gaze information sent by the second device is received, determining that the device at which the target user is gazing is switched from the first device to the second device, wherein the gaze information is configured to indicate that the target user is gazing at the second device.

5. The method according to any one of the preceding claims, wherein after handing off the target task from the first device to the second device in response to detection that the device at which the target user is gazing is switched from the first device to the second device, the method further comprises:
in response to detection that the device at which the target user is gazing is switched from the second device to the first device, stopping handing off the target task to the second device.

6. The method according to any one of the preceding claims , wherein after handing off the target task from the first device to the second device in response to detection that the device at which the target user is gazing is switched from the first device to the second device, the method further comprises:
in response to detection that the device at which the target user is gazing is switched from the second device to a fourth device, stopping handing off the target task to the second device; and
handing off the target task from the first device to the fourth device to display the target task on the fourth device.

7. The method according to any one of the preceding claims , further comprising:
in response to that the first device detects a plurality of users, and the plurality of users comprise a reference user, determining the reference user as the target user; or
in response to that the first device detects a plurality of users, and the plurality of users do not comprise the reference user, determining any user among the plurality of users as the target user;
wherein the reference user is a user to which an account logged in the first device belongs.

8. The method according to claim 7, further comprising:
sending user information to each of the at least one third device respectively, wherein the user information is configured to indicate the target user.

9. The method according to any one of claims 1 to 8, wherein the first device and the at least one third device are logged in by a same account and are in a same local area network.

10. A task handoff apparatus, comprising:
a display module, configured to display a target task, wherein the target task is a task that is running in a foreground and can be handed off in a first device;
a task handoff module, configured to hand off the target task from the first device to a second device in response to detection that a device at which a target user is gazing is switched from the first device to the second device, so as to display the target task on the second device;
wherein the first device is associated with at least one third device, and the second device is any one of the at least one third device.

11. An electronic device, comprising:
a processor; and
a memory for storing instructions executable by the processor;
wherein the processor is configured to execute the method according to any one of claims 1-9.

12. A non-transitory computer-readable storage medium, wherein when instructions in the storage medium are executed by a processor of an electronic device, the electronic device is caused to perform the method according to any one of claims 1-9.

## Amended claims

### Amended claims in accordance with Rule 137(2) EPC.

1. A task handoff method, comprising:
displaying (S201) a target task, wherein the target task is a task that is running in a foreground and can be handed off on a first device;
in response to detection that a device at which a target user is gazing is switched from the first device to a second device, handing off (S202) the target task from the first device to the second device, so as to display the target task on the second device;
wherein the first device is associated with at least one third device, and the second device is any one of the at least one third device,
wherein in response to detection that the device at which the target user is gazing is switched from the first device to the second device, handing off the target task from the first device to the second device, comprises:
in a case that a handoff confirmation switch of the second device is turned off, in response to detection that the device at which the target user is gazing is switched from the first device to the second device, handing off the target task from the first device to the second device.

2. The method according to claim 1, wherein in response to detection that the device at which the target user is gazing is switched from the first device to the second device, handing off the target task from the first device to the second device, comprises:
in a case that the handoff confirmation switch of the second device is turned on, in response to detection that the device at which the target user is gazing is switched from the first device to the second device, and a handoff confirmation operation is detected by the second device, handing off the target task from the first device to the second device.

3. The method according to claim 1 or 2, wherein after displaying the target task, the method further comprises:
in response to detection that the target user is not gazing at the first device and gaze information sent by the second device is received, determining that the device at which the target user is gazing is switched from the first device to the second device, wherein the gaze information is configured to indicate that the target user is gazing at the second device.

4. The method according to any one of the preceding claims, wherein after handing off the target task from the first device to the second device in response to detection that the device at which the target user is gazing is switched from the first device to the second device, the method further comprises:
in response to detection that the device at which the target user is gazing is switched from the second device to the first device, stopping handing off the target task to the second device.

5. The method according to any one of the preceding claims, wherein after handing off the target task from the first device to the second device in response to detection that the device at which the target user is gazing is switched from the first device to the second device, the method further comprises:
in response to detection that the device at which the target user is gazing is switched from the second device to a fourth device, stopping handing off the target task to the second device; and
handing off the target task from the first device to the fourth device to display the target task on the fourth device.

6. The method according to any one of the preceding claims, further comprising:
in response to that the first device detects a plurality of users, and the plurality of users comprise a reference user, determining the reference user as the target user; or
in response to that the first device detects a plurality of users, and the plurality of users do not comprise the reference user, determining any user among the plurality of users as the target user;
wherein the reference user is a user to which an account logged in the first device belongs.

7. The method according to claim 7, further comprising:
sending user information to each of the at least one third device respectively, wherein the user information is configured to indicate the target user.

8. The method according to any one of claims 1 to 7, wherein the first device and the at least one third device are logged in by a same account and are in a same local area network.

9. A task handoff apparatus, comprising:
a display module (701), configured to display a target task, wherein the target task is a task that is running in a foreground and can be handed off in a first device;
a task handoff module (702), configured to hand off the target task from the first device to a second device in response to detection that a device at which a target user is gazing is switched from the first device to the second device, so as to display the target task on the second device;
wherein the first device is associated with at least one third device, and the second device is any one of the at least one third device,
wherein the task handoff module is further configured to hand off the target task from the first device to the second device, in a case that a handoff confirmation switch of the second device is turned off, in response to detection that the device at which the target user is gazing is switched from the first device to the second device.

10. An electronic device, comprising:
a processor (820); and
a memory (804) for storing instructions executable by the processor;
wherein the processor (820) is configured to execute the method according to any one of claims 1-8.

11. A non-transitory computer-readable storage medium, wherein when instructions in the storage medium are executed by a processor of an electronic device, the electronic device is caused to perform the method according to any one of claims 1-8.
